# EUROPEAN PATENT SPECIFICATION

(11) **EP 1 835 672 B1**
(45) Date of publication and mention of the grant of the patent: **08.05.2013**
(21) Application number: 07103794.9
(22) Date of filing: 08.03.2007
(51) Int. Cl.: H04L 12/70

(54) **Data-switching apparatus having a scheduling mechanism for arbitrating between requests for transfers of data sets, for a node of very high data rate communications network**
Daten-Schaltvorrichtung mit einem Scheduling-Mechanismus zur Arbitrierung zwischen Anfragen für Übertragungen von Datensätzen, für einen Knoten von sehr hoher Datenrate Kommunikationsnetzes
Dispositif de commutation de données à mécanisme d'arbitrage entre demandes de transfert d'ensembles de données, pour un noeud d'un réseau de communication à trés haut débit

(30) Priority: 14.03.2006 FR 0650856
(43) Date of publication of application: 19.09.2007
(73) Proprietor: Alcatel Lucent, 75007 Paris (FR)
(72) Inventor: Post, Georg, 91620 La Ville du Bois (FR); Noirie, Ludovic, 91620 Nozay (FR)
(74) Representative: Sciaux, Edmond

(56) References cited:
- EP-A2- 1 009 189
- EP-A2- 1 061 763
- EP-A2- 1 549 103
- WO-A-2004/102989
- US-A1- 2004 085 979

## Description

The invention relates to high or very high data rate communications networks, and more precisely to communications apparatus that is used in the nodes of such networks for the purpose of routing (or switching) data packets, time division multiplexing (TDM) circuits, or a superposition of packets and of TDM circuits, to their respective destinations.

The invention relates more particularly to switching apparatus that comprises inlet interfaces serving to deliver at their outlets the data that they receive at their inlets, a switching stage (having one or more levels) serving to route (or to switch) to its outlets the data that it receives at its inlets from the inlet interfaces, outlet interfaces serving to deliver at their outlets the routed data that they receive at their inlets from the switching stage, and scheduling means serving to control the transfers of data between the inlet interfaces and the outlet interfaces, within successive time slots, by means of grant messages in reply to transfer requests from the inlet interfaces.

The inlet interfaces, like the outlet interfaces with which they can constitute inlet/outlet interfaces having separate physical ports, are generally in the form of line cards that are mutually parallel and that can offer data rates of about 10 gigabits per second (Gbps).

Document WO 2004/102989 describes a time division multiplexing circuit-switching router in which a predetermined central routing table contains instructions allocating connections between the inlets and the outlets in successive time slots. This allocation is repeated periodically. No information is given as regards how to determine this routing table.

EP-A-1061763 discloses a pipelined scheduler which allows easy implementation and control and further fair scheduling among input lines of a crossbar high speed switch fabric. By means of a round-robin communication scheme, a systematically ordered sequence of visits to time slots can be obtained regardless of whether the number of scheduler modules is even or odd by framing the time axis and using a priority matrix to reserve future time slots. Further, a Carry Over Round-robin Pipelined Scheduler (CORPS) achieves scalability to a large number of ports. Moreover, CORPS achieves one scheduling decision per line per slot, by scheduling packets in future slots. It is well suited to the support of Quality of Service traffic, since the choice of the queues to be scheduled is arbitrary. CORPS limits itself to resolve, in a fair way, the contention for output ports.

EP-A-1009189 discloses a protocol for scheduling of packets in high-speed cell based switches. The switch is assumed to use a logical cross-bar fabric with input buffers. The scheduler may be used in optical as well as electronic switches with terabit capacity. The proposed round-robin greedy scheduling (RRGS) achieves optimal scheduling at terabit throughput, using a pipeline technique. The pipeline approach avoids the need for internal speedup of the switching fabric to achieve high utilization, a method for determining a time slot in a NxN crossbar switch for a round robin greedy scheduling protocol, comprising N logical queues corresponding to N output ports, the input for the protocol being a state of all the input-output queues, output of the protocol being a schedule, the method comprising: choosing input corresponding to i = (constant-k-1) mod N, stopping if there are no more inputs, otherwise choosing the next input in a round robin fashion determined by i = (i + 1) mod N; choosing an output j such that a pair (i,j) to a set C= {(i,j) ¦ there is at least one packet from 1 to j}, if the pair (i,j) exists; removing i from a set of inputs and repeating the steps if the pair (i,j) does not exist; removing i from the set of inputs and j from a set of outputs; and adding the pair (i,j) to the schedule and repeating the steps.

US-A-2004085979 discloses a multiple input/output-queued (MIOQ) switch. This MIOQ switch comprises a (k,m)-dimensional crossbar fabric having k ingress lines and m egress lines; N input buffers at each input; M output buffers at each output; Nxk interconnection networks each of which is able to move a packet from each input to one of the k egress lines; and mxM interconnection networks each of which is able to move the arrived packet at output from the m egress lines to one of the M (wherein M is m or N) output buffers. The multiple input/output-queued (MIOQ) switch according to the present invention requires no "speed-up". Performance matches the performance of an output-queued switch.

In prior art apparatus, when the inlet interfaces receive the data that is to be routed to chosen outlet interfaces, said inlet interfaces must generate data transfer requests of fixed size addressed to all of the outlet interfaces. The transfer requests are then time-division multiplexed and then routed to the outlet interfaces, in their respective time slots, by the switching stage. The scheduling means serve to determine whether each outlet interface is capable of receiving the quantities of data that correspond to each request that concerns it. If a request can be satisfied, the scheduling means generate a grant message addressed to the inlet interface in question. The grant messages are then time division multiplexed, and are then routed to the inlet interfaces in question, in their respective time slots, by the switching stage.

This TDM transfer request signaling mechanism is quite suitable so long as the data switching throughputs are not too high, i.e. so long as the number of inlet (or of outlet) interfaces remains small, and typically less than 50. However, it is no longer suitable when high switching throughputs (e.g. around 1 tetrabit per second (Tbps) are needed, which require at least 100 inlet (and at least 100 outlet) interfaces, or even very high switching throughputs (e.g. around 10 Tbps or higher, which requires at least 1000 inlet (and outlet) interfaces). This results from the fact that an increase by a factor N in the number of inlet interfaces induces an increase by a factor N² in the number of signaling circuits (i.e. in the number of streams of transfer requests and in the number of streams of grant messages).

In other words, the above-mentioned scheduling mechanism is unsuitable for transforming networks of a certain size into networks of larger size (i.e. it lacks scalability);

An object of the invention is thus to remedy this situation.

To this end, it provides data switching apparatus for a node of a communications network, said apparatus comprising firstly inlet interfaces arranged to deliver at their outlets data to be routed (or switched) that is received at their inlets, secondly a switching stage arranged to route (or switch) to its outlets data to be routed that is received at its inlets, thirdly outlet interfaces serving to deliver at their outlets routed data that is received at their inlets, and fourthly scheduling means serving to control the transfer of data between said inlet interfaces and said outlet interfaces, within successive time slots, by means of grant messages in reply to transfer requests from the inlet interfaces.

A data switching apparatus of this type is known by EP 1 549 109 A2.

In order to facilitate understating of the following description, it is recalled that the switching stage (or matrix) makes it possible to transfer three types of signal: transfer requests, grant messages, and data sets (referred to as "packets" or "cells").

The switching apparatus according to the invention is characterized by the features of claim 1.

It should be noted that the transfers can be made within a fixed time, without using buffer memories having variable times or queues in the switching stage (or matrix).

The apparatus according to the invention can have other characteristics that can be taken separately or in combination, and, in particular:
- one or each inlet interface can serve to incorporate into its transfer requests, in addition to the quantities of data to be transferred, designations of class of service and/or designations of logic ports that are destinations of the data, and/or preferred choices of future time slots and of quantities to be transferred in said slots;
- the portion of the scheduling means (in one or each outlet interface) may, for example, serve to compare the number of data sets that is designated in at least one received request with the number of data sets that its outlet interface can still receive during a forecast period including at least one given future time slot; a transfer request may specify a number of sets to be transferred while leaving the outlet interface to decide in which time slots, within a given forecast period, said sets will be transferred. In a variant, for all of some of the number of sets concerned by the request, the transfer request can specify a chronological distribution of the sets within the forecast period, by assigning a preferred number of sets to at least some time slots in the forecast period;
- the portion of the scheduling means (in one or each outlet interface) may serve to compare a preferred number of sets for at least one future time slot, expressed in at least some of the transfer requests, with a number of data sets that its outlet interface can still receive during said future time slot;
- the portion of the scheduling means in one or each outlet interface may serve to generate a grant message whose destination is an inlet interface that has delivered a transfer request, which grant message is representative of at least two numbers of data sets that said inlet interface is authorized to transfer successively to said outlet interface during at least two successive time slots;
- each portion of the scheduling means in an outlet interface may serve to generate grant messages, each of which has a number of numbers of data sets authorized to be transferred that is at least equal to the sum of the number of time slots necessary for transmitting a request from an inlet interface to its outlet interface and of the number of time slots necessary for transmitting a grant message from its outlet interface to said inlet interface;
- one or each inlet interface may serve to deliver, during a time slot, a number of requests that is less than or equal to a chosen threshold;
- the switching stage may serve to delete received transfer requests and/or received grant messages according to at least one chosen criterion;
   ➢ the switching stage may serve to delete requests and/or grant messages when the number of requests routed to the same destination during the same time slot exceeds the reception capacity of said destination;
   ➢ the switching stage may serve to compare with a first chosen threshold the sum of the requests received during the current time slot, and to delete some of said requests when said sum exceeds the first threshold, e.g. by deleting each request received during said current time slot after the sum has become equal to the first chosen threshold;
   ➢ said switching stage can serve firstly to compare with a first chosen threshold the sum of the transfer requests received during the current time slot, so as to determine the number of transfer requests to be deleted, secondly to sequence said received requests according to their order of arrival in said current time slot and of the numbers of the inlet interfaces that generated them, and thirdly when said sum is greater than said first chosen threshold, to delete received requests placed from a first position to a second position defined by the number of requests to be deleted, the first position of a time slot corresponding to the position coming immediately after the second position of the preceding time slot;
   ➢ the switching stage may serve to compare with a second chosen threshold the sum of the grant messages received during the current time slot, and to delete each grant message received during said current time slot after the sum has become equal to the second chosen threshold;
   ➢ the switching stage may serve firstly to compare with a second chosen threshold the sum of the grant messages received during the current time slot, so as to determine the number of messages to be deleted, secondly to sequence the received grant messages according to their order of arrival in the current time slot and of the numbers of the outlet interfaces that generated them, and thirdly when said sum is greater than the first threshold chosen, to delete received grant messages from a first position to a second position defined by said number of messages to be deleted, the first position of a time slot corresponding to the position coming immediately after the second position of the preceding time slot;
- the switching stage may include storage means serving to store requests during a time slot. In which case, the switching stage serves to compare with a first chosen threshold the sum of the requests stored in the storage means and of the requests received during the current time slot, and to address to the storage means at least some of the requests received during the current time slot when said sum is greater than said first chosen threshold, with a view to routing during a following time slot;
- the switching stage may include storage means serving to store grant messages during a time slot. In which case, the switching stage serves to compare with a second chosen threshold the sum of the grant messages stored in the storage means and of the grant messages received during the current time slot, and to address to the storage means at least some of the grant messages received during the current time slot when said sum is greater than said second chosen threshold, with a view to routing during a following time slot;
- in the presence of received data that is associated with different classes of traffic, one or each inlet interface may serve to define different requests for data sets that are associated with different classes of traffic;
- in the presence of classes of traffic that are associated with different priority levels, the switching stage may serve to route (or to switch) the received requests according to the priority levels that are associated with them;
- in the presence of classes of traffic that are associated with different priority levels, the portion of the scheduling means of one or of each outlet interface may serve to satisfy the received requests according to the priority levels that are associated with them;
- one or each inlet interface may serve to incorporate at least some of the requests, relating to data sets that are waiting for transfer, into a header of a data set that is ready to be transferred;
- the switching stage may include (separately from the portion(s) dedicated to the data sets) a first sub-portion dedicated to switching transfer requests and a second sub-portion dedicated to switching grant messages;
- the portion of the scheduling means in one or each outlet interface is arranged to incorporate into certain grant messages addressed to an inlet interface an item of information representative of a recommended waiting time or delay prior to delivering another transfer request whose destination is said outlet interface;
- in the presence of an increasing number of transfer requests that are not authorized, an inlet interface may serve to reduce progressively the number of transfer requests transmitted during each time slot until a chosen percentage of authorized transfer requests is reached once again;
- the portion of the switching stage that is devoted to routing said grant messages may be arranged in a manner such as to route the grant messages along reverse paths relative to the paths taken by the transfer requests for which the portion of the switching stage has just cleared the paths, thereby enabling loss-free operation to be achieved;
- in a variant, the switching stage may be arranged in a manner such as to delete requests using one of the mechanisms mentioned above, only if their number for the same destination is such that the volume of data that is the subject of said requests exceeds the reception capacity of said destination. It is also possible to require that the remaining requests suffice to saturate the data reception capacity of the outlet interface in question; and
- said switching stage may have additional resources dedicated to switching the data sets and/or the transfer requests, so as to enable contention to be reabsorbed.

The invention also provides a communications network node equipped with communications apparatus of the type presented above.

The invention is particularly, though not exclusively, suitable for communications networks and for network nodes that are at least partially optical, and for switching matrices that do not have queue memories.

Other characteristics and advantages of the invention appear on examining the following detailed description and the accompanying drawings, in which:
- Figure 1 highly diagrammatically and functionally shows a first embodiment of switching apparatus according to the invention;
- Figure 2 highly diagrammatically and functionally shows a second embodiment of switching apparatus according to the invention; and
- Figure 3 highly diagrammatically shows an implementation of the mechanism for deleting transfer requests in a switching stage, for five successive time slots.

The accompanying drawings may serve not only to supplement the description of the invention, but also to contribute to defining said invention, where appropriate.

An object of the invention is to make it possible to switch data at high or very high data rates by means of switching apparatus that implements a scheduling mechanism for scheduling data transfer requests.

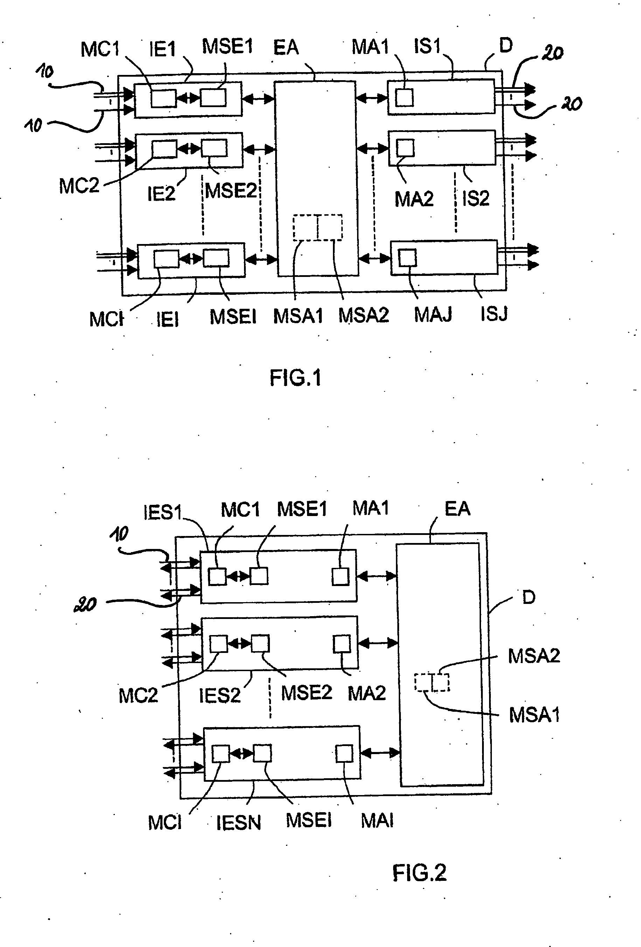

Reference is made firstly to Figure 1 for presenting switching apparatus D according to the invention that can be installed in a node, such as, for example, a router, of a communications network, optionally of the optical type, such as, for example, a "metropolitan" network or a transport "backbone" network.

By way of non-limiting example, it is considered below that the apparatus D serves to route (or switch) data packets.

The term "data packet" is used herein to mean a group of data grouping together in a pre-established format both information data to be transmitted or "payload" data, and also auxiliary data contained, for example, in a header. The header contains, in particular, an item of information representative of the destination of the packet and generally a class of quality of service (QoS). The item of information can be an explicit destination address or a label representative of said destination. Among the most common packet formats, mention can be made, for example, of Internet Protocol (IP) packets, Multi-Protocol Label Switching (MPLS) packets, Ethernet packets which are of variable size, and Asynchronous Transfer Mode (ATM) packets which are of fixed size.

However, the invention is not limited to this type of switching apparatus D. It relates equally well to data packet switching, to TDM circuit switching, and to a combination of data packet switching and of TDM circuit switching in the same node. The invention thus relates both to switches and to routers.

Switching apparatus D essentially comprises inlet interfaces IEi, a switching stage EA, outlet interfaces ISj, and scheduling means MAj.

The inlet interfaces IEi are mutually parallel and serve to deliver at their outlets the data that they receive at their inlets (the data being in the form of packets in this example). More precisely, each inlet interface IEi (i = 1 to I) has N inlets (10) and at least one (1) outlet. For example, I is equal to 1000. However, it may take any value greater than or equal to 1.

Each inlet interface IEi can, for example, constitute a line card.

In addition, each inlet interface IEi has storage means MSEi serving to store temporarily the data received at the various inlets so long as it is not authorized (granted the right) to be routed by the scheduling means MAj in chosen time slots. For example, the storage means MSEi are implemented in the form of First In First Out (FIFO) buffer memories or in the form of queues, e.g. implemented in the form of chained lists. The storage means MSEi can be subdivided into as many portions as there are outlet interfaces ISj, so as to store the data addressed to each of them, and each portion can be subdivided into sub-portions (e.g. 3 or 8) dedicated to respective ones of the various classes of traffic with which the received data items are associated.

In addition, each inlet interface IEi serves to constitute data sets from the received data packets that are to pass through the same outlet interface ISj, before storing them in its storage means MSEi. It is important to note that a data set can be constituted by a fraction of a received data packet or by a plurality of received packet fractions. Naturally, such fractions, which are generally referred to as "cells" must all be of the same size (in terms of number of bits). For example, each set has 64 eight-bit bytes.

Any technique for constructing data sets that is known to the person skilled in the art can be considered, and in particular the technique described in Patent Document FR 2864395.

Finally, each inlet interface IEi also has a control module MCi serving to generate transfer requests during time slots for the purpose of requesting transfer of a certain number of data sets. Each transfer request corresponds to the number of data sets, belonging to the same stream (and thus having the same destination) and waiting for switching in the storage means MSEI, that the inlet interface IEi wishes to transfer to the outlet interface ISj that is coupled to the destination node of the data, via one of its outlets.

A transfer request can, for example, have the same size (in terms of number of bits) as a data set to be routed (or switched). For example, each transfer request has 64 eight-bit bytes. However, this is not obligatory. It is possible to imagine requests having a different size (e.g. smaller) than the size of the payload data sets that are stored in the storage means MSEi of each inlet interface IEi. It is then said that the granularities of the data sets and of the transfer requests are different.

When the received data items are associated with different classes of traffic, each inlet interface IEi can serve to define different requests for sets whose data items are associated with different classes of traffic.

It is important to note that a transfer request can, in addition to including the sizes and any designations of class(es) of service, include designations of the destination logic ports for the data items, and also lists of preferred choices of future time slots and of quantities to be transferred in said slots.

The number of transfer requests that an inlet interface IEi can generate and deliver at its outlet during a given time slot depends firstly on its capacities (in terms of bandwidth) and secondly on the switching capacities of the switching stage EA that are made available to signaling traffic. For example, each inlet interface IEi can deliver at its outlet, during each time slot, 25 or 30 requests addressed to 25 or 30 outlet interfaces ISj that are different or otherwise (since each request corresponds to the same stream, an inlet interface IEi can need to generate a plurality of requests relating to traffics that are different but that have the same destination and thus are addressed to the same outlet interface ISj).

The requests are preferably totally dissociated from the data sets. It is then said that the internal signaling traffic is dissociated from the internal payload data traffic. However, this is not obligatory. It is possible to imagine that the requests can be incorporated into headers that are part of the data sets to be transferred (and to be routed) during following time slots to the outlet interfaces ISj. In which case, a request, which is incorporated into the header of a data set that is about to be transferred in the next time slot, relates to one or more data sets that could be transferred in the following time slot(s).

The switching stage EA serves to route (or to switch) to the outlets (coupled to J outlet interfaces ISj) the sets that it receives at its inlets from the I inlet interfaces IEi. It is important to note that the routed sets are both the payload data sets that are stored in the storage means MSEi of each inlet interface IEi and also the requests that constitute the signaling and that are delivered at the outlets of the inlet interfaces IEi.

When the granularities of the data sets and of the requests are identical, the resources of the switching stage EA can be used for switching either of the two types of set. Conversely, when the granularities of the data sets and of the requests are different, the switching stage EA has a first sub-portion dedicated to switching the requests and a second sub-portion dedicated to switching the grant messages.

It is important to note that the switching stage EA is dimensioned, in terms of switching resources, in a manner such as to enable a chosen number of data sets and a chosen number of requests to be switched for each inlet interface IEi, and to enable a chosen number of grant messages to be switched for each outlet interface ISj, during each time slot. For example, the switching resources can make it possible, during each time slot, to route (or to switch) 200 data sets and from 25 to 30 requests for each inlet interface IEi, and from 25 to 30 grant messages for each outlet interface ISj.

The switching stage EA can also have additional switching resources dedicated to switching data sets and/or requests, in order to enable at least some of the contentions that might arise to be reabsorbed. For example, it is possible to provide from 10% to 20% of additional switching resources. Thus, the switching stage EA can, for example, transmit and receive 240 data cells (or sets) per time slot, while the inlet and outlet stages offer a capacity of only 200 cells to the outside world.

Any type of switching stage EA can be imagined, be it made up of one switching block or of a plurality of switching blocks.

The outlet interfaces ISj are mutually parallel and serve to deliver at their outlets the routed data items that they receive at their inlets. More precisely, each outlet interface ISj (j = 1 to J) has at least one (1) inlet and M outlets (20). For example, J is equal to 1000. However, J may take any value greater than or equal to 1.

The numbers I and J of inlet interfaces IEi and of outlet interfaces ISj are preferably mutually equal. However, this is not obligatory. In addition, the number N of inlets of each inlet interface IEi is preferably equal to the number M of outlets of each outlet interface ISj. However, this is not obligatory.

Each outlet interface ISj can, for example, constitute a line card.

It is important to note that the inlet interfaces IEi and the outlet interfaces ISj are not obligatorily dissociated physically as they are in the example shown in Figure 1. They can be grouped together in inlet/outlet interfaces IESi as shown diagrammatically in the variant embodiment of Figure 2. In which case, as shown, the inlets (10) and the outlets (20) of the inlet/outlet interfaces IESi that are physically connected to the transmission lines and that therefore define inlet ports and outlet ports are physically dissociated.

Each outlet interface ISj has storage means (not shown) serving to store temporarily the data sets received at its inlet(s) so that said data sets can be processed in order to make it possible to reconstruct the packets (in this example) from which they come. Any technique for reconstructing data packets from portions of data sets that is known to the person skilled in the art can be considered, and in particular the technique that is described in Patent Document FR 2864395. Once an outlet interface ISj has reconstructed the packets, it can deliver them at the outlets that are coupled to the destination nodes, via the transmission lines in question.

For example, the storage means of each outlet interface ISj are implemented in the form of buffer memories of the FIFO type or of the queue type. These storage means are generally subdivided into as many portions as there are outlet interfaces ISj, so as to store the data that is addressed to each of them, and each portion can be subdivided into sub-portions (e.g. 3 or 8) dedicated to respective ones of the various classes of traffic with which the received data items are associated.

Finally, each outlet interface ISj has a scheduling module MAj that constitutes one of the portions of the scheduling means of the apparatus D.

Each scheduling module MAj serves to determine whether each transfer request received by its outlet interface ISj can be at least partially satisfied during at least one future time slot.

For this purpose, the scheduling module MAj can, for example, compare the number of data sets that is designated in a transfer request received by its outlet interface ISj with the number of data sets that its outlet interface is still capable of receiving during at least one given future time slot. The scheduling module MAj can take account of or can ignore the preferred future time slots expressed in the requests. For this purpose, the scheduling module MAj continuously updates a table of available capacities in its outlet interface ISj for a sliding forecast period including a plurality of future time slots. Thus, when the scheduling module MAj processes a transfer request, it compares the requested number of data sets to be transferred with the numbers of data sets that its outlet interface ISj should be capable of receiving during a plurality of future time slots (e.g. the next six or eight or twelve time slots).

It can then determine the number of data sets that the requesting inlet interface IEi can transfer during one or more designated future time slots, and it can then generate a corresponding grant message. The sum of the quantities of the grants for each future time slot, transmitted by the outlet interface ISj to all of the requesting inlet interfaces IEi, is less than or equal to the reception capacity of said outlet interface ISj (e.g. equal to 240 data sets or cells per time slot).

For example, if the scheduling module MAj receives a request to transfer eleven (11) data sets, it can generate a grant message including the byte (0, 3, 0, 3, 0, 3, 0, 2). Each component of this byte designates the number of data sets authorized to be transferred during a given time slot. For example, the left-most component designates the time slot (t+1) that immediately follows the time slot (t) during which the inlet interface IEi receives the byte, the following component designates the next time slot (t+2), and so on until the last component. In this example, the forecast period extends over eight time slots.

This grant message is routed by the switching stage EA to the inlet interface IEi that is the destination of said grant message (i.e. that generated the transfer request to which the grant message replies).

On receiving such a byte from a outlet interface ISj (e.g. IS2), the destination inlet interface IEi (e.g. IE1) immediately knows that it is allowed to transfer 0 data sets during the next time slot (t+1), then at the most 3 data sets during the following time slot (t+2), then 0 data sets during the following time slot (t+3), then at the most 3 data sets during the following time slot (t+4), then 0 data sets during the following time slot (t+5), then at the most 3 data sets during the following time slot (t+6), then 0 data sets during the following time slot (t+7), then at the most 2 data sets during the following time slot (t+8).

This example corresponds to a situation in which the transfer request is fully satisfied over eight consecutive time slots. However, a transfer request from an inlet interface IEi can be satisfied only partially, or even not at all, by the scheduling module MAj of an outlet interface ISj. For example, if the scheduling module MAj receives a transfer request for transferring eight (8) data sets, it can generate a grant message including the byte (2,0,0,0,0,1,0,3), which corresponds to a partial grant (6 out of 8). In the event of a total refusal to transfer data sets, the scheduling module MAj can either generate a byte having 0s only (e.g. (0,0,0,0,0,0,0,0)) or a singleton comprising one 0 ({0}), or indeed it can refrain from replying to the received transfer request. In which case, the destination inlet interface IEi knows that it must generate another transfer request if it does not receive a grant message within a predetermined time, e.g. equal to the sum of the go time necessary for a transfer request to reach the destination outlet interface ISj and of the return time necessary for a grant message to reach the inlet interface IEi.

If it is considered that one time slot is necessary for a request (or for a data set) to be transferred from the inlet interface IEi to the switching stage EA, then at least one other time slot is necessary for said request (or for said data set) to be routed internally by the switching stage EA, and then another time slot is necessary for the routed request (or for the routed data set) to be transferred from the switching stage EA to the destination outlet interface ISj, then the go time for transferring the transfer request (or the data set) from an inlet interface IEi to an outlet interface ISj is at least equal to three time slots. The return time for transferring a grant message from an outlet interface ISj to an inlet interface IEi is thus at least equal to three time slots. A go and return time is thus at least equal to six time slots.

When a grant message comprises a byte, the number of components of the byte is preferably at least equal to the number of time slots comprising a go and return time. This makes it possible for the inlet interface IEi to issue a transfer request that always takes account of the grant messages of each preceding request for the same stream, and to receive grant messages that cover all of the time slots without interruption. In other words, the forecast period is longer than the signaling go and return time. For example, the number of components of the bytes is preferably equal to twice the number of time slots comprising a go and return time.

In addition, in order to prevent an inlet interface IEi from generating another transfer request every time it receives a grant message that refuses to allow it to perform a transfer, at least partially, the scheduling module MAj of each outlet interface ISj can optionally be arranged in a manner such as to incorporate into at least some of the grant messages an item of information representative of the waiting time or delay that it recommends to the inlet interface IEi (that it cannot satisfy) before generating another transfer request addressed to its outlet interface ISj.

Thus, each time an inlet interface IEi receives from an outlet interface ISj a grant message including the recommended delay information, it triggers, for example, a time delay of a duration equal to the recommended delay in order to generate another transfer request addressed to said outlet interface ISj only once the time delay has expired.

When an inlet interface IEi receives from an outlet interface ISj a grant message that satisfies only partially one of its transfer requests, it makes an additional transfer request (naturally addressed to the same outlet interface ISj). Said additional transfer request contains a number equal to the difference between the number contained in the partially satisfied request and the total number of data sets to be transferred and contained in the grant message. For example, if an inlet interface IEi has asked to transfer eight data sets but the grant message only allows it to transfer six, then it generates an additional transfer request containing a number equal to two (8-6=2).

In addition, when an inlet interface IEi receives a grant message that allows it to transfer a given number K of data sets to an outlet interface ISj, it might not be capable of transferring said K data sets to said outlet interface ISj. This situation can arise in particular when an inlet interface IEi has received grant messages from other outlet interfaces ISj' and when the sum of the data sets that it has been authorized to deliver at its outlets (by the various outlet interfaces) during the current time slot is greater than the transmission capacities of the inlet interface towards the switching stage EA. This condition can arise in particular when scheduling modules MAj associated with outlet interfaces ISj have not been able to take account of all of the time preferences that might be contained in the transfer requests coming from an inlet interface IEi.

In which case, the inlet interface IEi transmits K' (where K'<K) data sets to the outlet interface ISj, then - or simultaneously - it generates an additional transfer request containing a number K" equal to K-K' and addressed to the same outlet interface ISj.

It should be noted that transfer requests can be deleted, as can grant messages, in the event that the transfer capacities at the switching stage EA are exceeded. In which case, the inlet interface IEi concerned by this loss generates, after a predetermined time (go and return time) and addressed to the outlet interface ISj in question, another transfer request relating to an identical or lower number of data sets, relative to the request which has been deleted or for which it has not received a grant message within the predetermined time.

In a currently preferred variant of the apparatus D, only the transfer requests can be deleted in the switching stage EA, whereas the grant messages and the data sets are never lost. Transport of the grant messages is guaranteed by the fact that they take, in precisely the same time order as the transfer request, the reverse path to the path taken by the requests that have succeeded. Absence of contention in the switching stage EA for the data sets is guaranteed by correct time division multiplexing of the grant message sets, coming from the same outlet interface ISj. That is to say, in each time slot, the data reception capacity of the outlet interface ISj is greater than or equal to the volume of data that is authorized to be transferred to it.

In a currently preferred variant of dimensioning of the resources of the apparatus D, any deleting of transfer requests has no adverse effect on performance, since each outlet interface ISj receives at any time a sufficient quantity of requests to be able to saturate entirely its reception capacity. The deletion mechanism is then constructed in order to guarantee equity between all of the request sources, e.g. by making a round robin choice of the positions to be deleted.

In addition, the switching stage EA can optionally serve to delete transfer requests when it does not have enough resources for routing (or switching) them. Various embodiments can be imagined for this purpose.

In a first embodiment, the switching stage EA can, for example, update continuously (during each time slot) the sum of the requests that it receives at its inlets, from the inlet interfaces IEi, in order to compare each updated sum with a first chosen threshold S1. If, at the end of the current time slot (t), said sum is less than the first threshold S1, then it routes all of the received requests to the outlet interfaces ISj in question, during the next time slot (t+1). Conversely, if, during the current time slot (t), said sum becomes equal to the first threshold S1, then it deletes surplus requests, e.g. by deleting each new transfer request received subsequently to the instant at which it detects the equality. Then, it routes all of the non-deleted requests to the outlet interfaces ISj in question, during the next time slot (t+1).

In a second embodiment, the switching stage EA can, for example, compare with a first chosen threshold S1, at the end of the current time slot (t), the sum of the requests that it has received during said current time slot. Then, it places in a (virtual) "grid" the requests that it has received according to their order of arrival in the current time slot (t) and of the number of the inlet interface IEi that generated them. The requests coming from the first inlet interface IE1 are, for example, placed at the head, followed by the requests from the second inlet interface IE2, then by the requests from the third inlet interface IE3, and so on until the last inlet interface IEI. Then, it places a pointer on a first position of the grid that corresponds to the position that comes immediately after a second position of the grid obtained during the preceding time slot (t-1). If the sum is less than the first threshold S1, then it routes all of the received requests to the outlet interfaces ISj in question, during the next time slot (t+1). Conversely, if the sum is greater than the first threshold S1, then it subtracts the first threshold S1 from the sum, which gives it a result. It then deletes all of the requests that are placed in the grid from the first position inclusive (defined by the pointer) to a second position inclusive, defined by the result of the subtraction. For example, if the pointer points to the position p=4 of the grid and if the result of the subtraction is equal to 3, then the first and second positions correspond respectively, for the current time slot, to the positions p=4 and p=6, and the switching stage EA deletes the three requests having the positions Nos. 4, 5, and 6. Then the switching stage EA routes all of the received requests, except for the requests that it has deleted, to the outlet interfaces ISj in question, during the next time slot (t+1).

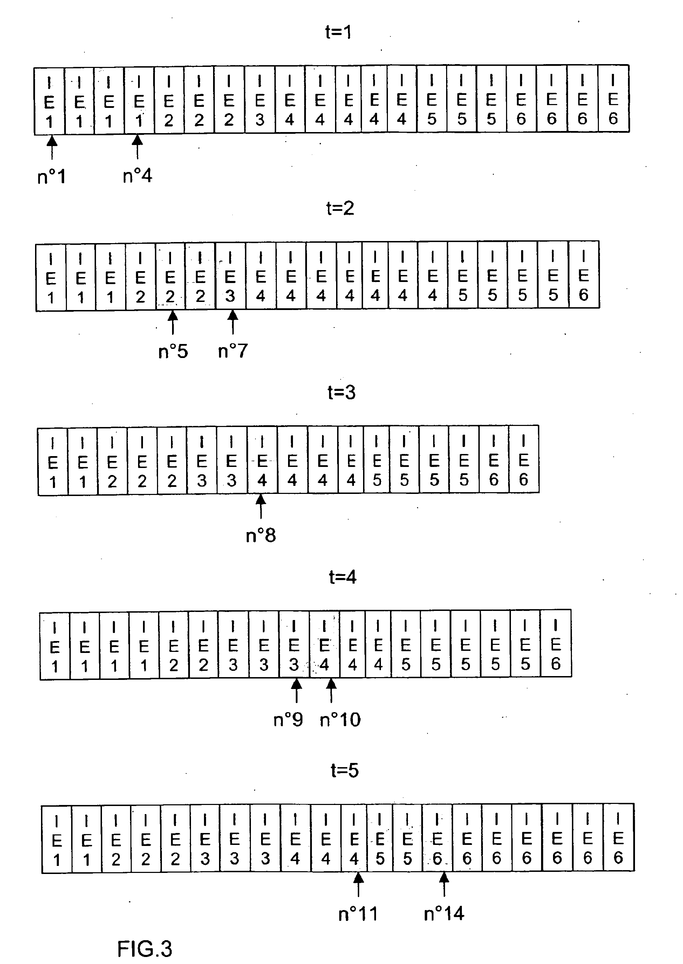

An example of the deletion mechanism is shown in Figure 3 for five successive time slots. In this example, it is considered, by way of non-limiting example, that the switching stage EA can route only 16 transfer requests. The references placed in the squares of Figure 3 designate the inlet interfaces IEi that transmitted the transfer requests.

During the first time slot (t=1), the switching stage EA has received 20 requests and the pointer is placed on the first position which corresponds to the first request (No. 1). Four requests (20 - 16) must thus be deleted starting with the first request (No. 1) so that the second position corresponds to the fourth request (No. 4). The switching stage EA thus deletes the shaded requests Nos. 1 to 4 (which, in this example, come from the first inlet interface IE1). The requests that are routed are thus those that are placed in the positions Nos. 5 to 20.

During the second time slot (t=2), the switching stage EA has received 19 transfer requests and the pointer is placed on the first position which now corresponds to the fifth request (No. 5 - former second position No. 4 + 1). Three requests (19 - 16) must therefore be deleted starting with the fifth request (No. 5) so that the second position corresponds to the seventh request (No. 7). The switching stage EA thus deletes the shaded requests Nos. 5 to 7 (which, in this example, come from the second inlet interface IE2 and from the third inlet interface IE3). The requests that are routed are thus those that are placed in the positions Nos. 1 to 4 and Nos. 8 to 19.

During the third time slot (t=3), the switching stage EA has received 17 transfer requests and the pointer is now placed on the first position which now corresponds to the eighth request (No. 8 - former second position No. 7 + 1). One request (17-16) must thus be deleted starting with the eighth (No. 8) so that the second position also corresponds to the eight request (No. 8). The switching stage EA thus deletes the shaded request No. 8 (which, in this example, comes from the fourth inlet interface IE4). The requests that are routed are thus those that are placed in the positions Nos. 1 to 7 and Nos. 9 to 17.

During the fourth time slot (t=4), the switching stage EA has received 18 transfer requests and the pointer is now placed on the first position which now corresponds to the ninth request (No. 9 - former second position No. 8 + 1). Two requests (18 - 16) must thus be deleted starting with the ninth (No. 9) so that the second position corresponds to the tenth request (No. 10). The switching stage EA thus deletes the shaded requests Nos. 9 and 10 (which, in this example, come from the third inlet interface IE3 and from the fourth inlet interface). The requests that are routed are thus those that are placed in the positions Nos. 1 to 8 and Nos. 11 to 18.

During the fifth time slot (t=5), the switching stage EA has received 20 transfer requests and the pointer is now placed on the first position which now corresponds to the eleventh request (No. 11 - former second position No. 10 + 1). Four requests (20 - 16) must thus be deleted starting with the eleventh (No. 11° so that the second position corresponds to the fourteenth request (No. 14). The switching stage EA thus deletes the shaded requests Nos. 11 to 14 (which, in this example, come from the fourth inlet interface IE4, from the fifth inlet interface IE5, and from the sixth inlet interface IE6). The requests that are routed are thus those that are placed in the positions Nos. 1 to 10 and Nos. 15 to 20.

This request deletion mechanism, which is of the "round robin" type, makes it possible equitably, in turn, and during successive time slots, to delete the requests that come from the various inlet interfaces IEi.

In a third embodiment, the switching stage EA can, for example, have storage means MSA1 serving to store during a time slot (t) the requests that it has not been able to route during the preceding time slot (t-1). In which case, the switching stage EA determines at the end of each time slot (t) the sum of the requests that are stored in the storage means MSA1 and of the requests that it has received during said time slot (t). Then, it compares said sum with a first chosen threshold S1. If the sum is less than the first threshold S1, then it routes all of the received requests and all of the requests that are stored in its storage means MSA1 to the outlet interfaces ISj in question, during the next time slot (t+1). Conversely, if the sum is greater than the first threshold S1, then it subtracts the first threshold S1 from said sum, which gives it a result. It then chooses a number of transfer requests that is equal to the result of the subtraction from among the requests that it has received during the current time slot (t). Then it routes the requests that were stored in its storage means MSA1 and the received requests that it has not chosen to the outlet interfaces ISj in question, during the next time slot (t+1). Finally, it stores the chosen requests in its storage means MSA1 in order to route them, if possible, during the following time slot (t+2).

In addition to or instead of what is described above, the switching stage EA can optionally serve to delete the grant messages when it does not have enough resources to switch them to its inlet interfaces IEi. It should be noted that the signaling mechanism preferably does not need to delete grant messages, as indicated above. However, in variants such as those that consist in appending the transfer requests to data sets, it is possible to delete grant messages. Various embodiments serving to satisfy equity criteria can be imagined for this purpose.

In a first embodiment, the switching stage EA can, for example, update continuously (during each time slot) the sum of the grant messages that it receives at its outlets, from the outlet interfaces ISj, in order to compare each updated sum with a second chosen threshold S2. If, at the end of the current time slot (t), said sum is less than the second threshold S2, then it routes all of the received grant messages to the inlet interfaces IEi in question, during the next time slot (t+1). Conversely, if, during the current time slot (t), said sum becomes equal to the second threshold S2, then it deletes surplus messages, e.g. by deleting each new set of grant messages received subsequently to the instant at which it detects the equality. Then, it routes all of the non-deleted grant messages to the inlet interfaces IEi in question, during the next time slot (t+1).

In a second embodiment, the switching stage EA can, for example, compare with a second chosen threshold S2, at the end of the current time slot (t), the sum of the grant messages that it has received during said current time slot. Then, it places in a (virtual) "grid" the grant messages that it has received according to their order of arrival in the current time slot (t) and of the number of the outlet interface ISj that generated them. The grant messages coming from the first outlet interface IS1 are, for example, placed at the head, followed by the grant messages from the second outlet interface IS2, then by the grant messages from the third outlet interface IS3, and so on until the last outlet interface ISJ. Then, it places a pointer on a first position of the grid that corresponds to the position that comes immediately after a second position of the grid obtained during the preceding time slot (t-1). If the sum is less than the second threshold S2, then it routes all of the received grant messages to the inlet interfaces IEi in question, during the next time slot (t+1). Conversely, if the sum is greater than the second threshold S2, then it subtracts the second threshold S2 from the sum, which gives it a result. It then deletes all of the grant messages that are placed in the grid from the first position inclusive (defined by the pointer) to a second position inclusive, defined by the result of the subtraction. For example, if the pointer points to the position p=10 of the grid and if the result of the subtraction is equal to 2, then the first and second positions correspond respectively, for the current time slot, to the positions p=10 and p=11, and the switching stage EA deletes the two grant messages having the positions Nos. 10 and 11. Then the switching stage EA routes all of the received requests, except for those that it has deleted, to the inlet interfaces IEi in question, during the next time slot (t+1).

This grant message deletion mechanism, which is of the "round robin" type, makes it possible, in turn, and during successive time slots, to delete the grant messages that come from the various outlet interfaces ISj.

In a third embodiment, the switching stage EA can, for example, have storage means MSA2 serving to store during a time slot (t) the grant messages that it has not been able to route during the preceding time slot (t-1). In which case, the switching stage EA determines at the end of each time slot (t) the sum of the grant messages that are stored in the storage means MSA2 and of the grant messages that it has received during said time slot (t). Then, it compares said sum with a second chosen threshold S2. If the sum is less than the second threshold S2, then it routes all of the received grant messages and all of the grant messages that are stored in its storage means MSA2 to the inlet interfaces IEi in question, during the next time slot (t+1). Conversely, if the sum is greater than the second threshold S2, then it subtracts the second threshold S2 from said sum, which gives it a result. It then chooses a number grant messages that is equal to the result of the subtraction from among the grant messages that it has received during the current time slot (t). Then it routes the grant messages that were stored in its storage means MSA2 and the received grant messages that it has not chosen to the inlet interfaces IEi in question, during the next time slot (t+1). Finally, it stores the chosen requests in its storage means MSA2 in order to route them, if possible, during the following time slot (t+2).

It should be noted that the invention can make it possible to take account of the various priority levels corresponding to various different classes of traffic with which the data sets might be associated. It can be essential to give priority to switching the data associated with one class of traffic over switching of data associated with one or more other classes of traffic. For example, it is necessary to give switching data associated with the voice over Internet Protocol (IP) class of traffic preference over data associated with the electronic messaging class of traffic (of the email or Short Message Service (SMS) type).

To this end, when the requests delivered by the inlet interfaces IEi concern items of data associated with classes of traffic, which are themselves associated with different priority levels, the switching stage EA can serve to route the requests that it receives according to the priority levels that are associated with them. More precisely, it gives priority to routing the requests that are associated with the highest priority level, then to routing the requests that are associated with the immediately lower priority level, and so on down to the lowest level. Therefore, in the various embodiments presented above, the switching stage EA can take account of the priority levels in its selection of transfer requests to be deleted or to be stored temporarily.

It is even possible to consider not authorizing deletion of requests that are associated with certain priority levels, e.g. with the highest priority level, or to choose the requests to be deleted by increasing order of priority.

In a variant, or in addition, the switching stage EA can serve to route the grant messages that it receives from the outlet interfaces ISj according to the priority levels that are associated with the data sets that they concern. More precisely, it gives priority to routing the grant messages that are associated with the highest priority level, then to routing the requests that are associated with the immediately lower priority level, and so on down to the lowest level. Therefore, in the various embodiments presented above, the switching stage EA can take account of the priority levels in its selection of grant messages to be deleted or to be stored temporarily.

It is even possible to consider not authorizing deletion of grant messages that are associated with certain priority levels, e.g. with the highest priority level, or to choose the grant messages to be deleted by increasing order of priority.

Also in a variant, or in addition, the scheduling module MAj of each outlet interface ISj can be arranged in a manner such as to satisfy as a priority the received requests that are associated with the highest priority level, either only for some of the following time slots (e.g. the next two or three time slots), or for all of the following time slots.

It should be noted that the control module MCi of each inlet interface IEi can optionally implement a mechanism for adapting the number of transfer requests generated. Such a mechanism can, for example, be used when the number of transfers requested and not authorized increases unceasingly, which occurs in the presence of a contention or of a transfer overload at one or more outlet interfaces ISj.

In which case, the control module MCI of each inlet interface IEi can, when it becomes aware that the number of transfers requested and not authorized increases unceasingly, progressively reduce the number of transfer requests that it transmits during each time slot until it becomes aware that the percentage of transfers authorized starts increasing again, and, for example, that it has reached, once again, a chosen percentage (e.g. greater than 90% in terms of number of cells). When the chosen percentage is reached again, the control module MCi of each inlet interface IEi can then progressively increase the number of transfer requests that it transmits during each time slot until it reaches, once again, the maximum value corresponding to the data rate that the outlet interface ISj that is the destination of this stream is capable of authorizing.

The invention is not limited to the embodiments of switching apparatus and of a node that are described above, merely by way of example, but rather it encompasses any variants that might be devised by the person skilled in the art within the ambit of the claims below.

Above, a plurality of examples are described of implementations of techniques for deleting transfer requests or grant messages, and of techniques for temporarily storing transfer requests or grant messages, which implementations are optionally mutually combinable. However, the invention is not limited to these examples. Any technique for deleting messages that is equitable or that operates according to criteria, e.g. of priority related to belonging to a class, as known to the person skilled in art, can be used in the context of the invention. Similarly, any technique for temporarily storing messages that is known to the person skilled in the art can be used in the context of the invention.

Above, use is made of the example of data sets constituted every time on the basis of packets that belong to the same stream (and thus that have the same destination reference in their headers). In a variant, a data set can be constituted by an inlet interface on the basis of packets or portions of packets having different final destinations served by the same outlet interface.

## Claims

1. Data switching apparatus (D) for a node of a communications network, said apparatus comprising:
inlet interfaces (IEi) arranged to receive from inputs (10) of said inlet interfaces data to be routed and to deliver to outputs of said inlet interfaces said data to be routed,
a switching stage (EA) arranged to receive from inputs of said switching stage data to be routed and to route said data to outputs of said switching stage,
outlet interfaces (ISj) arranged to receive routed data at inputs of said outlet interfaces and to deliver said routed data to outputs (20) of said outlet interfaces,
and scheduling means (MA1, MAj) arranged to control the transfer of data between said inlet interfaces (IEi) and said outlet interfaces (ISj), within successive time slots, by means of grant messages in reply to transfer requests from said inlet interfaces (IEi),
said data switching apparatus being **characterized in that**:
i) at least one of the inlet interfaces (IEi) is arranged to deliver at least one transfer request addressed to at least one of said outlet interfaces (ISj), which at least one transfer request designates a number of data sets to be routed wherein the destination of said number of data sets is said at least one outlet interface;
ii) said switching stage (EA) is arranged to route to its outlets said transfer requests received at its inlets; and
iii) said outlet interface (ISj) includes a portion (MAj) of said scheduling means, which portion is arranged to determine whether a received transfer request can be at least partially satisfied by said outlet interface (ISj) during a future time slot, and to deliver a grant message whose destination is the requesting inlet interface (IEi), wherein the grant message designates said future time slot and the grant message includes a maximum number of data sets associated with the designated future time slot, wherein the said number represents a maximum number of data sets that said inlet interface is authorized to transfer during said designated future time slot, so that said inlet interface (IEi) is capable of delivering at its outlet, in said time slot designated in said grant message, a number of data sets to be transferred that is less than or equal to the maximum number of data sets associated with said designated future time slot.

2. Apparatus according to claim 1, **characterized in that** the portion of said scheduling means (MAj) in an outlet interface (ISj) is arranged to compare the number of data sets that is designated in a received transfer request with the number of data sets that its outlet interface (ISj) can still receive during a determined forecast period including the at least one future time slot.

3. Apparatus according to claim 1, **characterized in that** the portion of said scheduling means (MAj) in an outlet interface (ISj) is arranged to compare a preferred number of sets for at least one future time slot, expressed in a transfer request, with a number of data sets that said outlet interface (ISj) can still receive during said future time slot.

4. Apparatus according to any one of claims 1 to 3, **characterized in that** the portion of said scheduling means (MAj) in an outlet interface (ISj) is arranged to generate a grant message whose destination is an inlet interface (IEi) that has delivered a transfer request, which grant message is representative of at least two numbers of data sets that are authorized to be transferred successively to said outlet interface during at least two successive time slots.

5. Apparatus according to claim 4, **characterized in that** the portion of said scheduling means (MAj) in an outlet interface (ISj) is arranged to generate a grant message that has a number of numbers of data sets authorized to be successively transferred that is equal to the sum of the number of time slots necessary for transmitting a transfer request from said inlet interface (IEi) to said outlet interface (ISj) and of the number of time slots necessary for transmitting a grant message from said outlet interface (ISj) to said inlet interface (IEi).

6. Apparatus according to any one of claims 1 to 5, **characterized in that** said switching stage (EA) is arranged to delete received transfer requests and/or received grant messages according to at least one chosen criterion.

7. Apparatus according to claim 6, **characterized in that** said switching stage (EA) is arranged: i) to compare with a first chosen threshold the sum of the transfer requests received during the current time slot, so as to determine the number of transfer requests to be deleted; ii) to sequence said received requests according to their order of arrival in said current time slot and of the numbers of the inlet interfaces (IEi) that generated them; and iii) when said sum is greater than said first chosen threshold, to delete received transfer requests from a first position to a second position defined by said number of transfer requests to be deleted, said first position of a time slot corresponding to the position coming immediately after the second position of the preceding time slot.

8. Apparatus according to claim 6 or claim 7, **characterized in that** said switching stage (EA) is arranged: i) to compare with a second chosen threshold the sum of the grant messages received during the current time slot, so as to determine the number of messages to be deleted; ii) to sequence said received grant messages according to their order of arrival in said current time slot and of the numbers of the outlet interfaces (ISj) that generated them; and iii) when said sum is greater than said first chosen threshold, to delete received grant messages from a first position to a second position defined by said number of messages to be deleted, said first position of a time slot corresponding to the position coming immediately after the second position of the preceding time slot.

9. Apparatus according to any one of claims 1 to 8, **characterized in that** said switching stage (EA) includes storage means (MSA2) arranged to store grant messages during a time slot, and is arranged to compare with a second chosen threshold the sum of the grant messages stored in said storage means (MSA2) and of the grant messages received during the current time slot, and to address to said storage means (MSA2) at least some of the grant messages received during said current time slot when said sum is greater than said second chosen threshold, with a view to routing during a following time slot.

10. Apparatus according to any one of claims 1 to 9, **characterized in that** said switching stage (EA) includes storage means (MSA1) arranged to store transfer requests during a time slot, and is arranged to compare with a first chosen threshold the sum of the transfer requests stored in said storage means (MSA1) and of the transfer requests received during the current time slot, and to address to said storage means (MSA1) at least some of the transfer requests received during said current time slot when said sum is greater than said first chosen threshold, with a view to routing during a following time slot.

11. Apparatus according to any one of claims 1 to 10, **characterized in that**, in the presence of received data associated with different classes of traffic, an inlet interface (IEi) is arranged to define different transfer requests for data sets associated with different traffic classes.

12. Apparatus according to any one of claims 1 to 11, **characterized in that**, in the presence of classes of traffic associated with different priority levels, said switching stage (EA) is arranged to route said received transfer requests according to the priority levels that are associated with them.

13. Apparatus according to any one of claims 1 to 12, **characterized in that**, in the presence of classes of traffic associated with different priority levels, the portion of the scheduling means (MAj) in an outlet interface (ISj) is arranged to satisfy the received transfer requests according to the priority levels that are associated with them.

14. Apparatus according to any one of claims 1 to 13, **characterized in that** an inlet interface (IEi) serves to incorporate into the transfer requests designations of destination logic port for the data and/or preferred choices of future time slots and of quantities to be transferred in said slots.

15. Apparatus according to any one of claims 1 to 14, **characterized in that** a portion of said switching stage (EA), which portion is devoted to routing said grant messages, is arranged in a manner such as to route the grant messages along reverse paths relative to the paths taken by the transfer requests for which the portion of the switching stage has just cleared the paths.

16. Apparatus according to any one of claims 1 to 15, **characterized in that** said switching stage (EA) is arranged in a manner such as to delete transfer requests if their number for the same destination is such that the volume of data that is the subject of said requests exceeds the reception capacity of said destination.

17. Apparatus according to any one of claims 1 to 16, **characterized in that** said switching stage (EA) includes a portion dedicated to switching data sets, a portion dedicated to switching said transfer requests, and a portion dedicated to switching said grant messages.

18. Apparatus according to any one of claims 1 to 17, **characterized in that** the portion of the scheduling means (MAj) in an outlet interface (ISj) is arranged to incorporate into a grant message an item of information representative of a recommended waiting time or delay prior to delivering another transfer request whose destination is said outlet interface.

19. Apparatus according to any one of claims 1 to 18, **characterized in that**, in the presence of an increasing number of transfer requests that are not authorized, an inlet interface (IEi) is arranged to reduce progressively the number of transfer requests transmitted during each time slot until a chosen percentage of authorized transfer requests is reached once again.

20. Apparatus according to any one of claims 1 to 19, **characterized in that** said switching stage (EA) has additional resources dedicated to switching said data sets and/or said transfer requests, so as to enable contention to be reabsorbed.

## Patentansprüche

1. Datenvermittlungsvorrichtung (D) für einen Knoten eines Kommunikationsnetzwerks, wobei die besagte Vorrichtung umfasst:
Eintrittsschnittstellen (IEi), die dazu ausgelegt sind, weiterzuleitende Daten von den Eingängen (10) der besagten Eintrittsschnittstellen zu empfangen und die besagten weiterzuleitenden Daten an Ausgänge der besagten Eintrittsschnittstellen zu liefern,
eine Vermittlungsstufe (EA), die dazu ausgelegt ist, weiterzuleitende Daten von Eingängen der besagten Vermittlungsstufe zu empfangen und die besagten Daten an Ausgänge der besagten Vermittlungsstufe weiterzuleiten,
Austrittsschnittstellen (ISj), die dazu ausgelegt sind, weitergeleitete Daten an Eingängen der besagten Austrittsschnittstellen zu empfangen und die besagten weitergeleiteten Daten an Ausgänge (20) der besagten Austrittsschnittstellen zu liefern,
und Planungsmittel (MA1, MAj), die dazu ausgelegt sind, die Übertragung von Daten zwischen den besagten Eintrittsschnittstellen (IEi) und den besagten Austrittsschnittstellen (ISj), innerhalb von aufeinanderfolgenden Zeitschlitzen, anhand von Sendeberechtigungsmitteilungen in Reaktion auf Übertragungsanforderungen von den besagten Eintrittsschnittstellen (IEi) zu steuern, wobei die besagte Datenvermittlungsvorrichtung **dadurch gekennzeichnet ist, dass**:
i) mindestens eine der Eintrittsschnittstellen (IEi) dazu ausgelegt ist, mindestens eine an mindestens eine der besagten Austrittsschnittstellen (ISj) adressierte Übertragungsanforderung zu liefern, wobei die besagte mindestens eine Übertragungsanforderung eine Anzahl von weiterzuleitenden Datensätzen bezeichnet, wobei das Ziel der besagten Anzahl von Datensätzen die besagte mindestens eine Austrittsschnittstelle ist;
ii) die besagte Vermittlungsstufe (EA) dazu ausgelegt ist, die besagten an ihren Eintritten empfangenen Übertragungsanforderungen an ihre Austritte weiterzuleiten; und
iii) die besagte Austrittsschnittstelle (ISj) einen Teil (MAj) der besagten Planungsmittel umfasst, wobei dieser Teil dazu ausgelegt ist, zu ermitteln, ob eine empfangene Übertragungsanforderung zumindest teilweise von der besagten Austrittsschnittstelle (ISj) innerhalb eines zukünftigen Zeitschlitzes erfüllt werden kann, und eine Sendeberechtigungsmitteilung, deren Ziel die anfordernde Eintrittsschnittstelle (IEi) ist, zu liefern, wobei die Sendeberechtigungsmitteilung den besagten zukünftigen Zeitschlitz bestimmt und die Sendeberechtigungsmitteilung eine maximale Anzahl von mit dem bestimmten zukünftigen Zeitschlitz assoziierten Datensätzen enthält, wobei die besagte Anzahl eine maximale Anzahl von Datensätzen, zu deren Übertragung innerhalb des besagten bestimmten Zeitschlitzes die besagte Eintrittsschnittstelle berechtigt ist, darstellt, so dass die besagte Eintrittsschnittstelle (IEi) fähig ist, an ihrem Austritt innerhalb des besagten in der besagten Sendeberechtigungsmitteilung angegebenen Zeitschlitzes eine Anzahl von zu übertragenden Datensätzen zu liefern, die niedriger als die oder gleich der maximale(n) Anzahl der mit dem besagten angegebenen zukünftigen Zeitschlitz assoziierten Datensätze ist.

2. Vorrichtung nach Anspruch 1, **dadurch gekennzeichnet, dass** der Teil des besagten Planungsmittels (MAj) in einer Austrittsschnittstelle (ISj) dazu ausgelegt ist, die in einer empfangenen Übertragungsanforderung angegebene Anzahl von Datensätzen mit der Anzahl von Datensätzen, die innerhalb eines festgelegten Prognosezeitraums, welcher den mindestens einen zukünftigen Zeitschlitz einschließt, an ihrer Austrittsschnittstelle (ISj) noch empfangen werden können, zu vergleichen.

3. Vorrichtung nach Anspruch 1, **dadurch gekennzeichnet, dass** der Teil der besagten Planungsmittel (MAj) in einer Austrittsschnittstelle (ISj) dazu ausgelegt ist, eine bevorzugte Anzahl von Sätzen für mindestens einen zukünftigen Zeitschlitz, ausgedrückt in einer Übertragungsanforderung, mit einer Anzahl von Datensätzen, welche die besagte Austrittsschnittstelle (ISj) innerhalb des besagten zukünftigen Zeitschlitzes noch empfangen kann, zu vergleichen.

4. Vorrichtung nach einem beliebigen der Ansprüche 1 bis 3, **dadurch gekennzeichnet, dass** der Teil der besagten Planungsmittel (MAj) in einer Austrittsschnittstelle (ISj) dazu ausgelegt ist, eine Sendeberechtigungsmitteilung, deren Ziel eine Eintrittsschnittstelle (IEi) ist, welche eine Übertragungsanforderung geliefert hat, zu erzeugen, wobei die Sendeberechtigungsmitteilung für mindestens zwei Anzahlen von Datensätzen repräsentativ ist, welche für die sukzessive Übertragung an die besagte Austrittsschnittstelle innerhalb von mindestens zwei aufeinanderfolgenden Zeitschlitzen genehmigt sind.

5. Vorrichtung nach Anspruch 4, **dadurch gekennzeichnet, dass** der Teil der besagten Planungsmittel (MAj) in einer Austrittsschnittstelle (ISj) dazu ausgelegt ist, eine Sendeberechtigungsmitteilung zu erzeugen, welche eine Anzahl von Anzahlen von Datensätzen, die für eine aufeinanderfolgende Übertragung genehmigt sind, aufweist, die der Summe der Anzahl von Zeitschlitzen, die für die Übertragung einer Übertragungsanforderung von der besagten Eintrittsschnittstelle (IEi) an die besagte Austrittsschnittstelle (ISj) erforderlich sind, und der Anzahl von Zeitschlitzen, die für die Übertragung einer Sendeberechtigungsmitteilung von der besagten Austrittsschnittstelle (ISj) an die besagte Eintrittsschnittstelle (IEi) erforderlich sind, entspricht.

6. Vorrichtung nach einem beliebigen der Ansprüche 1 to 5, **dadurch gekennzeichnet, dass** die besagte Vermittlungsstufe (EA) dazu ausgelegt ist, empfangene Übertragungsanforderungen und/oder empfangene Sendeberechtigungsmitteilungen gemäß mindestens einem gewählten Kriterium zu löschen.

7. Vorrichtung nach Anspruch 6, **dadurch gekennzeichnet, dass** die besagte Vermittlungsstufe (EA) dazu ausgelegt ist: i) die Summe der innerhalb des aktuellen Zeitschlitzes empfangenen Übertragungsanforderungen mit einem ersten gewählten Grenzwert zu vergleichen, um die Anzahl der zu löschenden Übertragungsanforderungen zu ermitteln; ii) die besagten empfangenen Anforderungen gemäß der Reihenfolge ihrer Ankunft in dem besagten aktuellen Zeitschlitz und den Anzahlen der Eintrittsschnittstellen (IEi), die diese erzeugt haben, zu sequenzieren; und iii) wenn die besagte Summe größer als der besagte erste gewählte Grenzwert ist, empfangene Übertragungsanforderungen aus einer ersten Position zu löschen und in eine zweite Position, die durch die besagte Anzahl von zu löschenden Übertragungsanforderungen definiert wird, zu verschieben, wobei die besagte erste Position eines Zeitschlitzes der Position, welche der zweiten Position des vorangehenden Zeitschlitzes unmittelbar folgt, entspricht.

8. Vorrichtung nach Anspruch 6 oder Anspruch 7, **dadurch gekennzeichnet, dass** die besagte Vermittlungsstufe (EA) dazu ausgelegt ist: i) die Summe der innerhalb des aktuellen Zeitschlitzes empfangenen Sendeberechtigungsmitteilungen mit einem zweiten gewählten Grenzwert zu vergleichen, um die Anzahl der zu löschenden Mitteilungen zu ermitteln; ii) die besagten empfangenen Sendeberechtigungsmitteilungen gemäß der Reihenfolge ihrer Ankunft in dem besagten aktuellen Zeitschlitz und den Anzahlen der Austrittsschnittstellen (ISj), die diese erzeugt haben, zu sequenzieren; und iii) wenn die besagte Summe größer als der besagte erste gewählte Grenzwert ist, empfangene Sendeberechtigungsmitteilungen aus einer ersten Position zu löschen und in eine zweite Position, die durch die besagte Anzahl von zu löschenden Mitteilungen definiert wird, zu verschieben, wobei die besagte erste Position eines Zeitschlitzes der Position, welche der zweiten Position des vorangehenden Zeitschlitzes unmittelbar folgt, entspricht.

9. Vorrichtung nach einem beliebigen der Ansprüche 1 bis 8, **dadurch gekennzeichnet, dass** die besagte Vermittlungsstufe (EA) ein Speichermittel (MSA2) umfasst, welches dazu ausgelegt ist, Sendeberechtigungsmitteilungen während eines Zeitschlitzes zu speichern, und dazu ausgelegt ist, die Summe der in dem besagten Speichermittel (MSA2) gespeicherten Sendeberechtigungsmitteilungen und der innerhalb des aktuellen Zeitschlitzes empfangenen Sendeberechtigungsmitteilungen mit einem zweiten gewählten Grenzwert zu vergleichen und zumindest einige der innerhalb des besagten aktuellen Zeitschlitzes empfangenen Sendeberechtigungsmitteilungen an das besagte Speichermittel (MSA2) zu adressieren, wenn die besagte Summer größer als der besagte zweite gewählte Grenzwert ist, um diese innerhalb eines folgenden Zeitschlitzes weiterzuleiten.

10. Vorrichtung nach einem beliebigen der Ansprüche 1 to 9, **dadurch gekennzeichnet, dass** das besagte Vermittlungsstufe (EA) ein Speichermittel (MSA1) umfasst, welches dazu ausgelegt ist, Übertragungsanforderungen während eines Zeitschlitzes zu speichern, und dazu ausgelegt ist, die Summe der in dem besagten Speichermittel (MSA1) gespeicherten Übertragungsanforderungen und der innerhalb des aktuellen Zeitschlitzes (MSA1) empfangenen Übertragungsanforderungen mit einem ersten Grenzwert zu vergleichen und zumindest einige der innerhalb des besagten aktuellen Zeitschlitzes empfangenen Übertragungsanforderungen an das besagte Speichermittel (MSA1) zu adressieren, wenn die besagte Summer größer als der besagte erste gewählte Grenzwert ist, um diese innerhalb eines folgenden Zeitschlitzes weiterzuleiten.

11. Vorrichtung nach einem beliebigen der Ansprüche 1 bis 10, **dadurch gekennzeichnet, dass** bei Vorhandensein von mit unterschiedlichen Verkehrsklassen assoziierten empfangenen Daten eine Eintrittsschnittstelle (IEi) dazu ausgelegt ist, unterschiedliche Übertragungsanforderungen für mit unterschiedlichen Verkehrsklassen assoziierte Datensätze zu definieren.

12. Vorrichtung nach einem beliebigen der Ansprüche 1 bis 11, **dadurch gekennzeichnet, dass** bei Vorhandensein von mit unterschiedlichen Prioritätsstufen assoziierten Verkehrsklassen die besagte Vermittlungsstufe (EA) dazu ausgelegt ist, die besagten empfangenen Übertragungsanforderungen gemäß den damit assoziierten Prioritätsgraden weiterzuleiten.

13. Vorrichtung nach einem beliebigen der Ansprüche 1 bis 12, **dadurch gekennzeichnet, dass** bei Vorhandensein von mit unterschiedlichen Prioritätsgraden assoziierten Verkehrsklassen der Teil der Planungsmittel (MAj) in einer Austrittsschnittstelle (ISj) dazu ausgelegt ist, die empfangenen Übertragungsanforderungen gemäß den damit assoziierten Prioritätsgraden zu erfüllen.

14. Vorrichtung nach einem beliebigen der Ansprüche 1 bis 13, **dadurch gekennzeichnet, dass** eine Eintrittsschnittstelle (IEi) dazu dient, Bezeichnungen des logischen Zielports für die Daten und/oder bevorzugte Wahlen von zukünftigen Zeitschlitzen und innerhalb der besagten Zeitschlitze zu übertragenden Mengen in die Übertragungsanforderungen einzufügen.

15. Vorrichtung nach einem beliebigen der Ansprüche 1 bis 14, **dadurch gekennzeichnet, dass** ein Teil der besagten Vermittlungsstufe (EA), welcher dem Weiterleiten der besagten Sendeberechtigungsmitteilungen gewidmet ist, derart ausgelegt ist, dass die Sendeberechtigungsmitteilungen auf Pfaden, die den von den Übertragungsanforderungen, für welche der Teil der Vermittlungsstufe die Pfade gerade freigemacht hat, benutzten Pfaden entgegengesetzt sind, weitergeleitet werden.

16. Vorrichtung nach einem beliebigen der Ansprüche 1 bis 15, **dadurch gekennzeichnet, dass** die besagte Vermittlungsstufe (EA) derart ausgelegt ist, dass Übertragungsanforderungen gelöscht werden, wenn deren Anzahl für dasselbe Ziel derart ist, dass die Menge der Daten, die Gegenstand der besagten Anforderungen sind, die Empfangskapazität des besagten Ziels überschreitet.

17. Vorrichtung nach einem beliebigen der Ansprüche 1 bis 16, **dadurch gekennzeichnet, dass** die besagte Vermittlungsstufe (EA) einen Teil, der der Vermittlung von Datensätzen gewidmet ist, einen Teil, der der Vermittlung der besagten Übertragungsanforderungen gewidmet ist, und einen Teil, der der Vermittlung der besagten Sendeberechtigungsmitteilungen gewidmet ist, umfasst.

18. Vorrichtung nach einem beliebigen der Ansprüche 1 bis 17, **dadurch gekennzeichnet, dass** der Teil der Planungsmittel (MAj) in einer Austrittsschnittstelle (ISj) für das Einfügen einer Information, welche für eine empfohlene Wartezeit oder Verzögerung vor Lieferung einer anderen Übertragungsanforderung, deren Ziel die besagte Austrittsschnittstelle ist, repräsentativ ist, in eine Sendeberechtigungsmitteilung ausgelegt ist.

19. Vorrichtung nach einem beliebigen der Ansprüche 1 bis 18, **dadurch gekennzeichnet, dass** bei Vorhandensein einer steigenden Anzahl von nicht zugelassenen Übertragungsanforderungen eine Eintrittsschnittstelle (IEi) dazu ausgelegt ist, die Anzahl der innerhalb jedes Zeitschlitzes übertragenen Übertragungsanforderungen schrittweise zu reduzieren, bis erneut ein gewählter Prozentsatz von genehmigten Übertragungsanforderungen erreicht wird.

20. Vorrichtung nach einem beliebigen der Ansprüche 1 bis 19, **dadurch gekennzeichnet, dass** die besagte Vermittlungsstufe (EA) zusätzliche Ressourcen aufweist, die der Vermittlung der besagten Datensätze und/oder der besagten Übertragungsanforderungen gewidmet sind, um zu ermöglichen, dass ein Zugangskonflikt erneut neutralisiert wird.

## Revendications

1. Appareil de commutation de données (D) pour un noeud d'un réseau de communications, ledit appareil comprenant :
des interfaces d'entrée (IEi) organisées pour recevoir de la part des entrées (10) desdites interfaces d'entrée des données à acheminer et pour délivrer aux sorties desdites interfaces d'entrée lesdites données à acheminer, un étage de commutation (EA) organisé pour recevoir de la part desdites entrées dudit étage de commutation des données à acheminer et pour acheminer lesdites données aux sorties dudit étage de commutation,
des interfaces de sortie (ISj) organisées pour recevoir les données acheminées aux entrées desdites interfaces de sortie et pour délivrer lesdites données acheminées aux sorties (20) desdites interfaces de sortie,
et des moyens d'ordonnancement (MA1, MAj) organisés pour commander le transfert de données entre lesdites interfaces d'entrée (IEi) et lesdites interfaces de sortie (ISj), à l'intérieur de créneaux temporels successifs, au moyen de messages d'acceptation en réponse aux demandes de transfert de la part desdites interfaces d'entrée (IEi), ledit appareil de commutation de données étant **caractérisé en ce que** :
i) au moins l'une des interfaces d'entrée (IEi) est organisée pour délivrer au moins une demande de transfert adressée à au moins l'une desdites interfaces de sortie (ISj), laquelle au moins une demande de transfert désigne un nombre d'ensembles de données à acheminer, la destination dudit nombre d'ensembles de données étant ladite au moins une interface de sortie ;
ii) ledit étage de commutation (EA) est organisé pour acheminer à ses sorties lesdites demandes de transfert reçues à ses entrées ; et
iii) ladite interface de sortie (ISj) comprend une portion (MAj) desdits moyens d'ordonnancement, laquelle portion est organisée pour déterminer si une demande de transfert reçue peut être au moins partiellement satisfaite par ladite interface de sortie (ISj) pendant un futur créneau temporel, et pour délivrer un message d'acceptation dont la destination est l'interface d'entrée (IEi) ayant adressé la demande, le message d'acceptation désignant ledit futur créneau temporel et le message d'acceptation incluant un nombre maximum d'ensembles de données associés avec le futur créneau temporel désigné, ledit nombre représentant un nombre maximum d'ensembles de données que ladite interface d'entrée est autorisée à transférer pendant ledit futur créneau temporel désigné, de sorte que ladite interface d'entrée (IEi) est capable de délivrer à sa sortie, dans ledit créneau temporel désigné dans ledit message d'acceptation, un nombre d'ensembles de données qui est inférieur ou égal au nombre maximum d'ensembles de données associé audit futur créneau temporel désigné.

2. Appareil selon la revendication 1, **caractérisé en ce que** la portion desdits moyens d'ordonnancement (MAj) dans une interface de sortie (ISj) est organisée pour comparer le nombre d'ensembles de données qui est désigné dans une demande de transfert reçue avec le nombre d'ensembles de données que son interface de sortie (ISj) peut toujours recevoir pendant une période prévisionnelle déterminée incluant l'au moins un futur créneau temporel.

3. Appareil selon la revendication 1, **caractérisé en ce que** la portion desdits moyens d'ordonnancement (MAj) dans une interface de sortie (ISj) est organisée pour comparer un nombre préféré d'ensembles pour au moins un futur créneau temporel, exprimé dans une demande de transfert, avec un nombre d'ensembles de données que ladite interface de sortie (ISj) peut toujours recevoir pendant ledit futur créneau temporel.

4. Appareil selon l'une quelconque des revendications 1 à 3, **caractérisé en ce que** la portion desdits moyens d'ordonnancement (MAj) dans une interface de sortie (ISj) est organisée pour générer un message d'acceptation dont la destination est une interface d'entrée (IEi) qui a délivré une demande de transfert, lequel message d'acceptation est représentatif d'au moins deux nombres d'ensembles de données dont le transfert réussi vers ladite interface de sortie est autorisé pendant au moins deux créneaux temporels successifs.

5. Appareil selon la revendication 4, **caractérisé en ce que** la portion desdits moyens d'ordonnancement (MAj) dans une interface de sortie (ISj) est organisée pour générer un message d'acceptation qui contient un nombre de nombres d'ensembles de données dont le transfert réussi est autorisé qui est égal à la somme du nombre de créneaux temporels qui sont nécessaires pour transmettre une demande de transfert de ladite interface d'entrée (IEi) à ladite interface de sortie (ISj) et du nombre de créneaux temporels qui sont nécessaires pour transmettre un message d'acceptation de ladite interface de sortie (ISj) à ladite interface d'entrée (IEi).

6. Appareil selon l'une quelconque des revendications 1 à 5, **caractérisé en ce que** ledit étage de commutation (EA) est organisé pour supprimer les demandes de transfert reçues et/ou les messages d'acceptation reçus conformément à au moins un critère choisi.

7. Appareil selon la revendication 6, **caractérisé en ce que** ledit étage de commutation (EA) est organisé : i) pour comparer avec un premier seuil choisi la somme des demandes de transfert reçues pendant le créneau temporel courant, de manière à déterminer le nombre de demandes de transfert à supprimer ; ii) pour séquencer lesdites demandes reçues conformément à leur ordre d'arrivée dans ledit créneau temporel courant et des nombres d'interfaces d'entrée (IEi) qui les ont générées ; et iii) lorsque ladite somme est supérieure audit premier seuil choisi, pour supprimer les demandes de transfert reçues d'une première position à une deuxième position définies par ledit nombre de demandes de transfert à supprimer, ladite première position d'un créneau temporel correspondant à la position qui vient immédiatement après la deuxième position du créneau temporel précédent.

8. Appareil selon la revendication 6 ou 7, **caractérisé en ce que** ledit étage de commutation (EA) est organisé : i) pour comparer avec un deuxième seuil choisi la somme des messages d'acceptation reçus pendant le créneau temporel courant, de manière à déterminer le nombre de messages d'acceptation à supprimer ; ii) pour séquencer lesdits messages d'acceptation reçus conformément à leur ordre d'arrivée dans ledit créneau temporel courant et des nombres d'interfaces de sortie (ISj) qui les ont générés ; et iii) lorsque ladite somme est supérieure audit deuxième seuil choisi, pour supprimer les messages d'acceptation reçus d'une première position à une deuxième position définies par ledit nombre de messages d'acceptation à supprimer, ladite première position d'un créneau temporel correspondant à la position qui vient immédiatement après la deuxième position du créneau temporel précédent.

9. Appareil selon l'une quelconque des revendications 1 à 8, **caractérisé en ce que** ledit étage de commutation (EA) contient des moyens de stockage (MSA2) organisés pour stocker les messages d'acceptation pendant un créneau temporel, et est organisé pour comparer avec un deuxième seuil choisi la somme des messages d'acceptation stockés dans lesdits moyens de stockage (MSA2) et des messages d'acceptation reçus pendant le créneau temporel courant, et pour adresser auxdits moyens de stockage (MSA2) au moins quelques-uns des messages d'acceptation reçus pendant ledit créneau temporel courant lorsque ladite somme est supérieure audit deuxième seuil choisi, avec une vision vers l'acheminement pendant un créneau temporel suivant.

10. Appareil selon l'une quelconque des revendications 1 à 9, **caractérisé en ce que** ledit étage de commutation (EA) contient des moyens de stockage (MSA1) organisés pour stocker les demandes de transfert pendant un créneau temporel, et est organisé pour comparer avec un premier seuil choisi la somme des demandes de transfert stockées dans lesdits moyens de stockage (MSA1) et des demandes de transfert reçues pendant le créneau temporel courant, et pour adresser auxdits moyens de stockage (MSA1) au moins quelques-unes des demandes de transfert reçues pendant ledit créneau temporel courant lorsque ladite somme est supérieure audit premier seuil choisi, avec une vision vers l'acheminement pendant un créneau temporel suivant.

11. Appareil selon l'une quelconque des revendications 1 à 10, **caractérisé en ce qu'**en présence de données reçues associées avec différentes classes de trafic, une interface d'entrée (IEi) est organisée pour définir différentes demandes de transfert pour les ensembles de données associés avec les différentes classes de trafic.

12. Appareil selon l'une quelconque des revendications 1 à 11, **caractérisé en ce qu'**en présence de classes de trafic associées avec différents niveaux de priorité, ledit étage de stockage (EA) est organisé pour acheminer lesdites demandes de transfert reçues conformément aux niveaux de priorité qui leur sont associés.

13. Appareil selon l'une quelconque des revendications 1 à 12, **caractérisé en ce qu'**en présence de classes de trafic associées avec différents niveaux de priorité, la portion des moyens d'ordonnancement (MAj) dans une interface de sortie (ISj) est organisée pour satisfaire aux demandes de transfert reçues conformément aux niveaux de priorité qui leur sont associés.

14. Appareil selon l'une quelconque des revendications 1 à 13, **caractérisé en ce qu'**une interface d'entrée (IEi) sert à incorporer dans les demandes de transfert les désignations du port logique de destination des données et/ou les choix préférés des futurs créneaux temporels et des quantités à transférer dans lesdits créneaux.

15. Appareil selon l'une quelconque des revendications 1 à 14, **caractérisé en ce qu'**une portion dudit étage de commutation (EA), laquelle portion est dédiée à l'acheminement desdits messages d'acceptation, est organisée de manière à acheminer les messages d'acceptation le long de chemins inverses par rapport aux chemins empruntés par les demandes de transfert pour lesquelles la portion de l'étage de commutation vient de libérer les chemins.

16. Appareil selon l'une quelconque des revendications 1 à 15, **caractérisé en ce que** ledit étage de commutation (EA) est organisé de manière à supprimer les demandes de transfert si leur nombre pour la même destination est tel que le volume de données qui est le sujet desdites demandes dépasse la capacité de réception de ladite destination.

17. Appareil selon l'une quelconque des revendications 1 à 16, **caractérisé en ce que** ledit étage de commutation (EA) contient une portion dédiée à la commutation des ensembles de données, une portion dédiée à la commutation desdites demandes de transfert et une portion dédiés à la commutation desdits messages d'acceptation.

18. Appareil selon l'une quelconque des revendications 1 à 17, **caractérisé en ce que** la portion desdits moyens d'ordonnancement (MAj) dans une interface de sortie (ISj) est organisée pour inclure dans un message d'acceptation un élément d'information représentatif d'un temps d'attente ou d'un retard recommandé avant de délivrer une autre demande de transfert dont la destination est ladite interface de sortie.

19. Appareil selon l'une quelconque des revendications 1 à 18, **caractérisé en ce qu'**en présence d'un nombre croissant de demandes de transfert qui ne sont pas autorisées, une interface d'entrée (IEi) est organisée pour réduire progressivement le nombre de demandes de transfert transmises pendant chaque créneau temporel jusqu'à ce qu'un pourcentage donné de demandes de transfert autorisées soit de nouveau atteint.

20. Appareil selon l'une quelconque des revendications 1 à 19, **caractérisé en ce que** ledit étage de commutation (EA) possède des ressources supplémentaires dédiées à la commutation desdits ensembles de données et/ou desdites demandes de transfert de manière à permettre de résoudre le conflit.
